# EUROPEAN PATENT APPLICATION

(11) **EP 4 549 772 A1**
(43) Date of publication of application: **07.05.2025**
(21) Application number: 23856390.2
(22) Date of filing: 27.07.2023
(51) Int. Cl.: F16D 65/12

(54) **BRAKE CALIPER**

(30) Priority: 23.08.2022 CN 202211013207
(71) Applicant: Bethel Automotive Safety Systems Co., Ltd., Wuhu, Anhui 241009 (CN)
(72) Inventor: GUO, Fengliang, Wuhu, Anhui 241009 (CN); ZHU, Yuancheng, Wuhu, Anhui 241009 (CN); LI, Yundong, Wuhu, Anhui 241009 (CN); XUAN, Ming, Wuhu, Anhui 241009 (CN); YE, Yixing, Wuhu, Anhui 241009 (CN)
(74) Representative: Canzler & Bergmeier Patentanwälte Partnerschaft mbB
(86) International application number: PCT/CN2023/109489
(87) International publication number: WO 2024/041300

(57) **Abstract**

A brake caliper, comprising an actuator and a locking mechanism, wherein the actuator comprises a first electric motor and a first transmission mechanism; the locking mechanism comprises a second electric motor (6), and a second transmission mechanism, which is connected to the second electric motor and has a self-locking function; and a power output part (3) of the second transmission mechanism meshes with a transmission gear (1) on a power transfer path of the first transmission mechanism when in a locked state. **The** brake caliper has a locking function and can still release a brake disc in time when the first electric motor and its control correlation fail, thereby avoiding the continuous locking of wheels during driving of a vehicle.

## Description

### TECHNICAL FIELD

The present disclosure belongs to the technical field of braking systems, and in particular to a brake caliper.

### BACKGROUND

EMB (electronic mechanical brake) uses a wheel-end motor to drive directly to achieve service braking and releasing function. Usually, a locking mechanism is needed to achieve the parking function.

During braking, if the main motor or control circuit of a single caliper suddenly fails, the transmission mechanism has resistance, the pressure between the brake pad and the brake disc cannot be completely released, and there is still residual clamping force between the brake pad and the brake disc. This residual clamping force causes the brake caliper to be in a clamped state. That is, at least one of the four wheels of the vehicle experiences excessive drag force, preventing the vehicle from operating safely and rendering it incapable of meeting the requirements for L3 and higher levels of autonomous driving.

In the existing EMB technology, the locking mechanism only has a parking function and does not have a function of releasing residual clamping force.

### SUMMARY

The present disclosure provides a brake caliper.

The brake caliper includes an actuator and a locking mechanism. The actuator includes a first motor and a first transmission mechanism. The locking mechanism includes a second motor and a second transmission mechanism which is connected with the second motor and has a self-locking function. A power output part of the second transmission mechanism is provided with a plurality of convex teeth meshed with a transmission gear on a power transmission path of the first transmission mechanism in a locked state.

The power output part of the second transmission mechanism is a semi-enclosed gear. The semi-enclosed gear is provided with a toothed region where the convex teeth are evenly distributed and a toothless region where the convex teeth are not arranged.

The second transmission mechanism includes a worm rod connected with the second motor. The worm rod is meshed with the power output part.

The second transmission mechanism includes a worm rod connected with the second motor and a worm wheel meshed with the worm rod. The worm wheel is connected with the power output part.

The brake caliper further comprises a positioning mechanism configured to determine an initial position of the power output part.

The positioning mechanism includes a limiting pin disposed on the power output part and a limiting spring piece matched with the limiting pin. The limiting spring piece is provided with a positioning groove for the limiting pin to be embedded when the power output part is in the initial position.

The brake caliper further comprises a gear housing. The gear housing is provided with a guide groove for the limiting pin to be embedded. The limiting spring piece is located in the guide groove.

The limiting pin is movably arranged on the power output part. A mounting hole for accommodating the limiting pin is disposed on the power output part. An elastic element for applying an elastic effect to the limiting pin is disposed in the mounting hole.

The power output part of the second transmission mechanism is a rack.

The second transmission mechanism includes a self-locking transmission mechanism connected with the second motor. The self-locking transmission mechanism is connected with the power output part.

The self-locking transmission mechanism is a screw nut mechanism.

The self-locking transmission mechanism is connected with the second motor through a third transmission mechanism. The third transmission mechanism includes a driving gear and a driven gear which are meshed with each other.

The power output part of the second transmission mechanism is meshed with a transmission gear located at a power output end or a power input end of the first transmission mechanism.

The power output part of the second transmission mechanism is meshed with a transmission gear located between the power input end and the power output end of the first transmission mechanism.

The brake caliper of the present disclosure can release the brake disc in time while achieving reliable locking, and can actively release the brake disc, thereby avoiding continuous locking of the wheels during the braking process of the vehicle.

### BRIEF DESCRIPTION OF THE DRAWINGS

FIG. 1 is a schematic diagram illustrating a partial structure of a brake caliper according to Embodiment 1 of the present disclosure.
FIG. 2 is a schematic diagram illustrating a partial structure of a brake caliper according to Embodiment 2 of the present disclosure.
FIG. 3 is a schematic diagram illustrating a cross section of a partial structure of a brake caliper.
FIG. 4 is a schematic structural diagram illustrating a power output part and a positioning mechanism.
FIG. 5 is a schematic diagram illustrating a cross section of a positioning mechanism.
FIG. 6 is a schematic structural diagram illustrating a locking mechanism according to Embodiment 3 of the present disclosure.
FIG. 7 is a schematic structural diagram illustrating a brake caliper according to Embodiment 4 of the present disclosure.
FIG. 8 is a schematic structural diagram illustrating a power output part and a positioning mechanism.
FIG. 9 is a schematic structural diagram illustrating a power output part and a positioning mechanism according to Embodiment 4 of the present disclosure.

### Reference Numerals in the Drawings:

1. transmission gear; 1a. transmission gear at a power output end; 1b. intermediate gear; 1c. transmission gear at a power input end; 2. brake caliper assembly; 3. power output part; 3a. limiting pin; 3b. elastic element; 3c. gasket; 4. worm rod; 5. worm wheel; 6. second motor; 7. bearing; 8. rotation member; 9. translation member; 10. gear housing; 10a. guide groove; 10b. limit spring piece; 11. driving gear; 12. screw shaft; 13. nut; 14. driven gear.

### DETAILED DESCRIPTION

The specific embodiments of the present disclosure are further explained in detail below by describing the embodiments with reference to the accompanying drawings, with the aim of helping those skilled in the art to have a more complete, accurate and in-depth understanding of the concept and technical solution of the present disclosure and facilitating its implementation.

### Embodiment 1

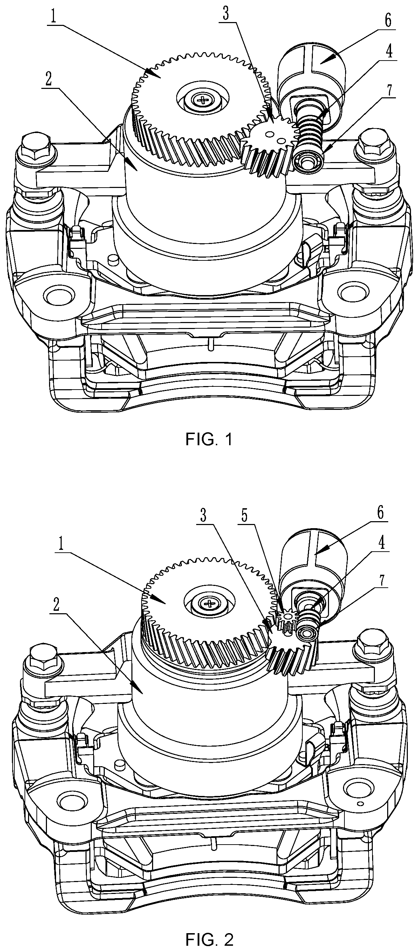

As shown in FIG. 1, the present embodiment provides a brake caliper, including an actuator, a brake caliper assembly 2, an inner brake pad, an outer brake pad, a motion conversion mechanism, and a locking mechanism. The actuator includes a first motor and a first transmission mechanism. The locking mechanism includes a second motor 6 and a second transmission mechanism which is connected with the second motor 6 and has a self-locking function. A power output part 3 of the second transmission mechanism is provided with a plurality of convex teeth meshed with a transmission gear 1 on a power transmission path of the first transmission mechanism in a locked state.

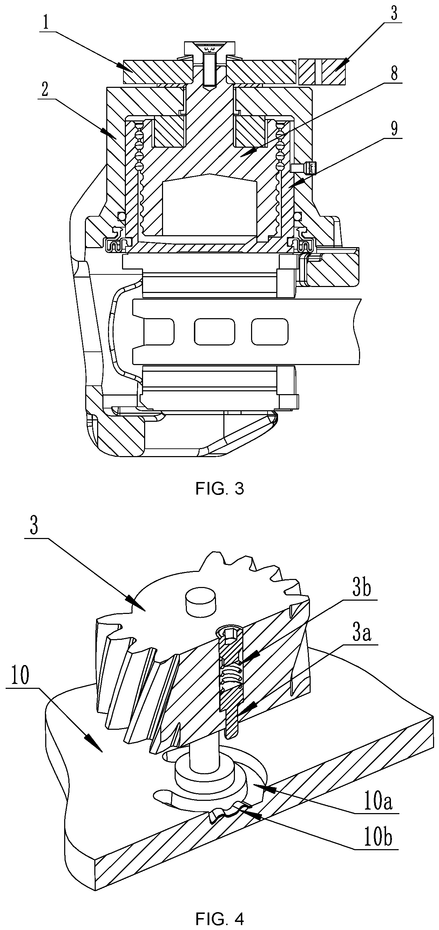

As shown in FIGs. 1 and 3, the brake caliper assembly 2 is a floating caliper structure having a cylinder hole and a hook structure. The inner brake pad, a brake disc, and the outer brake pad are sequentially mounted in the hook structure. A gear at a power input end of the first transmission mechanism is connected with the first motor. The transmission gear 1 at a power output end of the first transmission mechanism is connected with the motion conversion mechanism. The motion conversion mechanism includes a rotation member 8 and a translation member 9. The motion conversion mechanism may be a ball screw pair or a sliding screw pair. In the present embodiment, the motion conversion mechanism is the ball screw pair, the rotation member 8 is a screw shaft, the translation member 9 is a piston, and the translation member 9 and the rotation member 8 form the ball screw pair. An inner spiral raceway matching an outer spiral raceway of the rotation member 8 is disposed on an inner wall of the translation member 9. An end surface of the translation member 9 is connected with the inner brake pad.

As shown in FIGs. 1, 3, and 4, in the present embodiment, the power output part 3 of the second transmission mechanism is meshed with the transmission gear 1 located at the power output end of the first transmission mechanism. The transmission gear 1 is connected with the rotation member 8. The transmission gear 1 rotates to drive the rotation member 8 to rotate synchronously. The power output part 3 of the second transmission mechanism is a semi-enclosed gear. The semi-enclosed gear is provided with a toothed region with uniformly distributed convex teeth and a toothless region without convex teeth. The teeth of the semi-enclosed gear are not distributed across the entire circumference of a pitch circle of the semi-enclosed gear. A radian of the toothed region is greater than 180 degrees, and a radian of the toothless region is less than 180 degrees. The convex teeth of the toothed region of the power output part 3 can be meshed with the transmission gear 1. The power output part 3 can roll along the transmission gear 1 until the toothed region of the power output part 3 is disengaged from the transmission gear 1. In this way, when the second motor 6 is running, the power output part 3 rotates, and when the toothed region of the power output part 3 is meshed with the transmission gear 1, the power output part 3 can roll along the transmission gear 1. At this time, the power output part 3 can drive the transmission gear 1 to rotate, the transmission gear 1 drives the rotation member 8 to rotate synchronously, and the rotation member 8 drives the translation member 9 to perform a linear motion, so as to realize the timely release of the brake caliper. After the power output part 3 rotates to a set angle, the toothed region of the power output part 3 is disengaged from the transmission gear 1, the power output part 3 rotates until the toothless region aligns with the transmission gear 1, and the power output part 3 can no longer drive the transmission gear 1 to rotate.

As shown in FIG. 1 and FIG. 3, the second transmission mechanism further includes a worm rod 4 connected with the second motor 6. The worm rod 4 is meshed with the power output part 3. The worm rod 4 is a power input part of the second transmission mechanism. The first motor and the second motor 6 are fixedly arranged. One end of the worm rod 4 is fixedly connected with an output end of the second motor 6, and the other end of the worm rod 4 is sleeved with a bearing 7. The worm rod 4 is meshed with the convex teeth of the toothed region of the power output part 3. An axis of the power output part 3 is parallel to an axis of the transmission gear 1. The maximum rotation angle of the power output part 3 is 180 degrees. When the vehicle is in a parking state, a part of the convex teeth of the toothed region of the power output part 3 are meshed with the transmission gear 1, and another part of the convex teeth of the toothed region of the power output part 3 are meshed with the worm rod 4. The power output part 3 cooperates with the worm rod 4 to form the second transmission mechanism with the self-locking function. At this parking state, the transmission gear 1 cannot rotate, and the motion conversion mechanism cannot operate. The plurality of convex teeth of the toothed region of the power output part 3 are meshed with the transmission gear 1, so that the strength is improved, the locking mechanism is not prone to failure, and the reliability can be improved.

When the first motor fails, the second motor 6 of the locking mechanism operates to drive the transmission gear 1 to operate through the second transmission mechanism, and the transmission gear 1 drives the motion conversion mechanism to operate, so that the caliper can release the brake disc, thereby avoiding continuous locking of the wheels during the braking process of the vehicle.

As shown in FIGs. 1, 4, and 5, the brake caliper of the present embodiment further includes a positioning mechanism for determining an initial position of the power output part 3. The positioning mechanism includes a limiting pin 3a disposed on the power output part 3 and a limiting spring piece 10b matched with the limiting pin 3a. The limiting spring piece 10b is provided with a positioning groove for the limiting pin 3a to be embedded when the power output part 3 is in the initial position.

As shown in FIGs. 1, 4, and 5, the brake caliper of the present embodiment further includes a gear housing 10. A guide groove 10a is provided on the gear housing 10 for the limiting pin 3a to be embedded. The limiting spring piece 10b is fixedly disposed in the guide groove 10a. The guide groove 10a is an arc-shaped groove arranged on a surface of the gear housing 10. The guide groove 10a and the power output part 3 are coaxially arranged. The gear housing 10 and the second motor 6 are relatively fixed, and the power output part 3 is rotatably arranged on the gear housing 10. The limiting pin 3a is movably arranged on the power output part 3. A mounting hole for accommodating the limiting pin 3a is disposed on the power output part 3. An elastic element 3b for applying an elastic effect to the limiting pin 3a is disposed in the mounting hole. A movement direction of the limiting pin 3a is parallel to the axis of the power output part 3. The mounting hole is a circular groove arranged inside the power output part 3. One end of the limiting pin 3a is located in the mounting hole, and the other end of the limiting pin 3a extends to an outer side of the mounting hole and contacts with the limit spring piece 10b.

As shown in FIG. 4, a screw is arranged in the mounting hole. The screw is threadedly connected with the power output part 3. The elastic element 3b is clamped between the screw and the limiting pin 3a. The elastic element 3b is a cylindrical helical spring and a compression spring.

As shown in FIGs. 1, 4, and 5, protrusions are respectively provided on both sides of the positioning groove on the limiting spring piece 10b. The positioning groove is located between the two protrusions. The protrusions protrude towards the inside of the guide groove 10a, and a distance between top ends of the protrusions and the power output part 3 is less than a distance between the positioning groove and the power output part 3. During the rotation process of the power output part 3, the power output part 3 can drive the limiting pin 3a to rotate synchronously, so that the limiting pin 3a moves between a first position a, a second position b and a third position c. The first position a, the second position b and the third position c are located on the same circle and the second position is located between the first position a and the third position c. The main function of the limiting pin 3a is to determine the initial position of the power output part 3. After the limiting pin 3a is embedded in the positioning groove, the limiting pin 3a is in the second position b, the toothed region of the power output part 3 is disengaged from the transmission gear 1, and the toothed region of the power output part 3 and the transmission gear 1 are not meshed, and the locking mechanism cannot lock the transmission gear 1. The first position a and the third position c are respectively located at two ends of the guide groove 10a in an arc length direction, and an angle between the first position a and the third position c is the maximum rotation angle of the power output part 3.

The locking function of the brake caliper of the present embodiment is implemented as follows.

During the parking process of the vehicle, the first motor runs, and after the power is transmitted to the transmission gear 1, the transmission gear 1 is driven to rotate in a first direction. The transmission gear 1 drives the motion conversion mechanism to perform corresponding actions, so that the brake caliper performs a clamping action. When a predetermined parking clamping force is reached, the second motor 6 drives the worm rod 4 to rotate, and then the worm rod 4 drives the power output part 3 to rotate in a second direction, and the convex teeth of the toothed region of the power output part 3 start to be meshed with the teeth of the transmission gear 1.

As the power output part 3 starts to rotate, the limiting pin 3a starts to move from the second position b, and the limiting pin 3a comes into contact with the protrusions of the limit spring piece 10b. After overcoming the elastic force of the elastic element 3b, the limiting pin 3a linearly moves towards the mounting hole. As the power output part 3 rotates, the limiting pin 3a passes over the protrusions of the limit spring piece 10b.

The power output part 3 drives the limiting pin 3a to continue to move within the guide groove 10a until the limiting pin 3a moves to the first position a. In this case, the limiting pin 3a contacts an inner wall surface of the end in the arc length direction of the guide groove 10a, and the power output part 3 stops rotating. When the second motor 6 stops operating after the power is cut off, the toothed region of the power output part 3 are meshed with the worm rod 4 and the transmission gear 1 simultaneously, the second transmission mechanism has the self-locking function, the transmission gear 1 is locked, and the motion conversion mechanism cannot operate, thereby realizing the parking locking function.

The first direction and the second direction are two opposite directions of rotation. If the first direction is a counterclockwise direction, the second direction is a clockwise direction.

The process of implementing the emergency release function of the brake caliper of the present embodiment is as follows.

During the braking process of the vehicle, if the first motor or the circuit controlling the first motor fails, due to the rotational resistance of the transmission system, the brake disc and the brake pads cannot be released on their own or completely detached from each other, resulting in the brake caliper remaining in a clamped state.

In this case, the second motor 6 of the locking mechanism is started, and the second motor 6 drives the worm rod 4 to rotate, and then the worm rod 4 drives the power output part 3 to rotate in the first direction. After the convex teeth of the toothed region of the power output part 3 are meshed with the teeth of the transmission gear 1, the power output part 3 starts to drive the transmission gear 1 to rotate in the second direction, and the transmission gear 1 drives the motion conversion mechanism to perform the corresponding actions, so that the brake caliper performs the release action, thereby eliminating the clamping force.

That is, when the main motor or control circuit fails, the second motor works to release the residual force between the brake pads and the brake disc, and the vehicle can still drive normally. Under the action of the EMB of the other three wheels, it still meets the requirements for L3 and higher levels of autonomous driving function.

As the worm rod 5 starts to rotate, the power output part 3 drives the limiting pin 3a to move from the second position b, and the limiting pin 3a contacts the protrusions of the limiting spring piece 10b. After overcoming the elastic force of the elastic element 3b, the limiting pin 3a linearly moves towards the mounting hole. As the power output part 3 rotates, the limiting pin 3a passes over the protrusions of the limiting spring piece 10b.

The power output part 3 drives the limiting pin 3a to continue to move in the guide groove 10a until the limiting pin 3a moves to the third position c. In this case, the limiting pin 3a contacts an inner wall surface at the other end of the guide groove 10a in the arc length direction, and the power output part 3 stops rotating.

### Embodiment 2

As shown in FIG. 2, the brake caliper of the present embodiment is different from that of Embodiment 1 in that the second transmission mechanism further includes a worm rod 4 connected with a second motor 6 and a worm wheel 5 meshed with the worm rod 4. The worm wheel 5 and the power output part 3 are coaxially and fixedly connected. The worm wheel 5 and the power output part 3 are connected to form a duplex gear, and the worm wheel 5 and the power output part 3 rotate synchronously. After the second motor 6 runs, the worm rod 4 drives the worm wheel 5 to rotate, and the worm wheel 5 can drive the power output part 3 to rotate 360 degrees.

The brake caliper of the present embodiment further includes a positioning mechanism for determining an initial position of the power output part 3. The positioning mechanism includes a limiting pin 3a and a limiting spring piece 10b matched with the limiting pin 3a. The limiting pin 3a can be disposed on the power output part 3, or on the worm wheel 5 coaxially and fixedly connected with the power output part 3. In this case, the limiting pin 3a is disposed on the power output part 3.

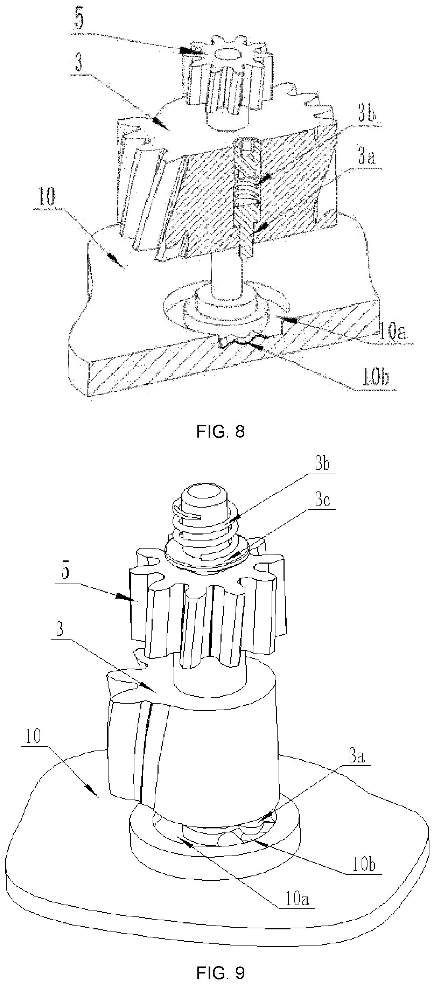

As shown in FIG. 8, in the present embodiment, the guide groove 10a is an annular groove extending along the entire circumference of a gear housing 10. The guide groove 10a and the power output part 3 are coaxially arranged. The limiting spring piece 10b is fixedly arranged in the guide groove 10a. Two protrusions are respectively disposed on both sides of the positioning groove on the limiting spring piece 10b. The positioning groove is located between the two protrusions. The protrusions protrude towards the guide groove 10a. A distance between the top ends of the protrusions and the power output part 3 is less than a distance between the positioning groove and the power output part 3. During the rotation process, the power output part 3 can drive the limiting pin 3a to rotate synchronously. The main function of the limiting pin 3a is to determine the initial position of the power output part 3. After the limiting pin 3a is embedded in the positioning groove, the limiting pin 3a is in the initial position, the toothed region of the power output part 3 is disengaged from the transmission gear 1, the toothed region of the power output part 3 and the transmission gear 1 are not meshed, and the locking mechanism cannot lock the transmission gear 1.

### Embodiment 3

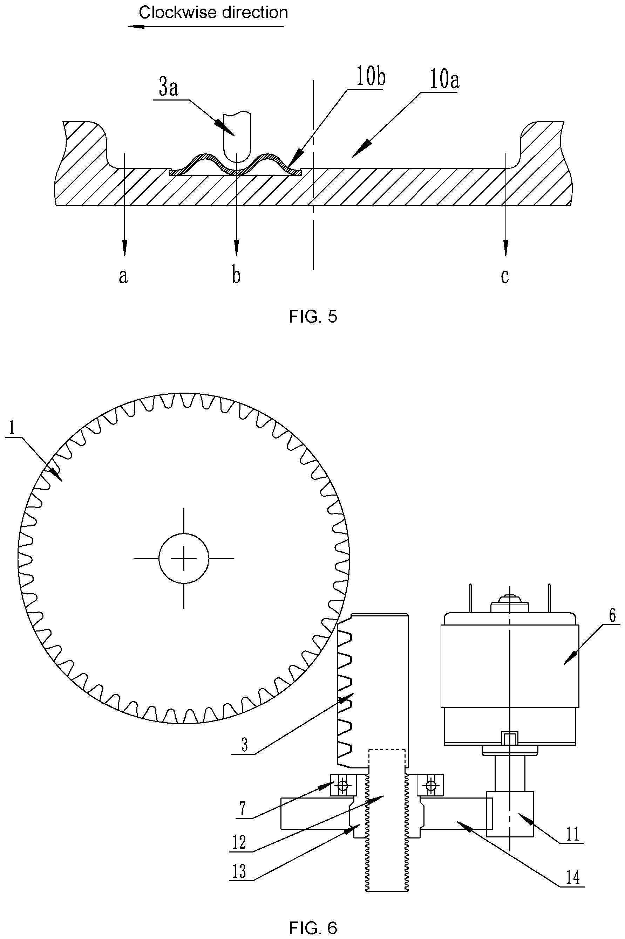

As shown in FIG. 6, the brake caliper of the present embodiment is different from that of Embodiment 1 and Embodiment 2 in that the structure of the locking mechanism is different. In the present embodiment, the power output part 3 of the second transmission mechanism is a rack. The second transmission mechanism further includes a self-locking transmission mechanism connected with the second motor 6. The self-locking transmission mechanism has a self-locking function and is connected with the power output part 3.

In the present embodiment, the self-locking transmission mechanism is a screw nut mechanism. The self-locking transmission mechanism includes a screw shaft 12 and a nut 13 which are cooperated. The screw shaft 12 and the nut 13 constitute a spiral transmission pair. The screw shaft 12 is fixedly connected with the power output par 3. The nut 13 and the driven gear 14 are coaxially and fixedly connected. The driven gear 14 is meshed with the driving gear 11. The driving gear 11 is fixedly connected with an output end of the second motor 6. The driven gear 14 cooperates with the driving gear 11 to form a third transmission mechanism.

The locking function of the brake caliper of the present embodiment is implemented as follows.

During the parking process of the vehicle, the first motor runs, and after the power is transmitted to the transmission gear 1, the transmission gear 1 is driven to rotate in a first direction, and the transmission gear 1 drives the motion conversion mechanism to perform corresponding actions, so that the brake caliper performs a clamping action. When a predetermined parking clamping force is reached, the second motor 6 drives the third transmission mechanism to operate, the third transmission mechanism drives the self-locking transmission mechanism to operate, and the screw shaft 12 of the self-locking transmission mechanism drives the power output part 3 to move linearly. When the power output part 3 moves a set distance, the power output part 3 is meshed with the transmission gear 1, and the power output part 3 stops rotating. The second motor 6 stops running after power is cut off, the power output part 3 is meshed with the transmission gear 1, the second transmission mechanism has the self-locking function, the transmission gear 1 is locked, and the motion conversion mechanism cannot operate, thereby realizing the parking locking function.

The emergency release function of the brake caliper of the present embodiment is implemented as follows.

During the braking process of the vehicle, if the first motor or the circuit controlling the first motor fails, due to the rotational resistance of the transmission system, the brake disc and the brake pads cannot be released on their own or completely detached from each other, causing the brake caliper to remain in a clamped state.

In this case, the second motor 6 of the locking mechanism is started, the second motor 6 drives the third transmission mechanism to operate, the third transmission mechanism drives the self-locking transmission mechanism to operate, and the screw shaft 12 of the self-locking transmission mechanism drives the power output part 3 to perform a linear motion. When the power output part 3 is meshed with the transmission gear 1, the power output part 3 drives the transmission gear 1 to rotate in the second direction, and the transmission gear 1 drives the motion conversion mechanism to perform corresponding actions, so that the brake caliper performs the release action, thereby releasing the clamping force.

That is, when the main motor or control circuit fails, the second motor works to release the residual force between the brake pads and the brake disc, and the vehicle can still drive normally, meeting the requirements for L3 and higher levels of autonomous driving function.

### Embodiment 4

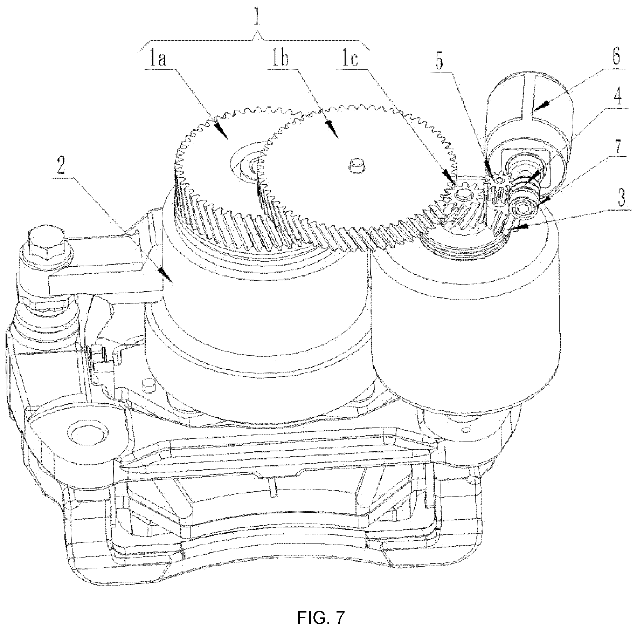

As shown in FIG. 7, the brake caliper of the present embodiment is different from that of Embodiment 2 in the position of the transmission gear. In the present embodiment, the power output part 3 of the second transmission mechanism is meshed with the transmission gear 1c located at the power input end of the first transmission mechanism. The transmission gear 1c at the power input end of the first transmission mechanism is fixedly connected with the output end of the first motor, and the transmission gear 1a at the power output end of the first transmission mechanism is connected with the motion conversion mechanism.

The brake caliper of the present embodiment further comprises a positioning mechanism for determining an initial position of the power output part 3. The positioning mechanism includes a limiting pin 3a and a limiting spring piece 10b matched with the limiting pin 3a. If the volume of the power output part 3 is small, the limiting pin 3a can be fixedly disposed on the power output part 3 or on the worm wheel 5 coaxially and fixedly connected with the power output part 3. That is, the limiting pin 3a is integrated with the power output part 3 or the worm wheel 5. In the present embodiment, the limiting pin 3a is integrated with the power output part 3.

The gear housing 10 and the second motor 6 are relatively fixed. The duplex gear including the power output part 3 and the worm wheel 5 is rotatably disposed on the gear shaft of the gear housing 10 and is axially movable. The elastic element 3b is coaxially arranged on the gear shaft of the gear housing 10 to apply an elastic force to the duplex gear including the power output part 3 and the worm wheel 5. The elastic element 3b is disposed on a side away from the limiting pin 3a. A gasket 3c is disposed between the elastic element 3b and the worm wheel 5.

As the worm gear 5 starts to rotate, the power output part 3 drives the limiting pin 3a to move from the second position b, and the limiting pin 3a contacts the protrusions of the limiting spring piece 10b. After overcoming the elastic force of the elastic element 3b, the power output part 3 and the worm wheel 5 move linearly along an axial direction and rotate at the same time, and the limiting pin 3a passes over the protrusions of the limiting spring piece 10b. The power output part 3 drives the limiting pin 3a to continue to move within the guide groove 10a until the locking or emergency release function is completed.

The power output part 3 of the second transmission mechanism is meshed with the transmission gear 1a at the power output end or the transmission gear 1c at the power input end of the first transmission mechanism. Alternatively, the power output part 3 of the second transmission mechanism is meshed with the intermediate gear 1b located between the power input end and the power output end of the first transmission mechanism.

The present disclosure is described by way of examples with reference to the accompanying drawings. Obviously, the specific implementation of the present disclosure is not limited to the above method. Various non-substantial improvements made using the method concepts and technical solutions of the present disclosure, or the above concepts and technical solutions of the present disclosure directly applied to other occasions without improvement are all within the protection scope of the present disclosure.

## Claims

1. A brake caliper, comprising an actuator and a locking mechanism, wherein the actuator includes a first motor and a first transmission mechanism, wherein the locking mechanism includes a second motor and a second transmission mechanism which is connected with the second motor and has a self-locking function, wherein a power output part of the second transmission mechanism is meshed with a transmission gear on a power transmission path of the first transmission mechanism in a locked state.

2. The brake caliper according to claim 1, wherein the power output part of the second transmission mechanism is a semi-enclosed gear, and the semi-enclosed gear comprises a toothed region with uniformly distributed convex teeth and a toothless region without convex teeth.

3. The brake caliper according to claim 2, wherein the second transmission mechanism comprises a worm rod connected with the second motor, and the worm rod is meshed with the power output part.

4. The brake caliper according to claim 2, wherein the second transmission mechanism comprises a worm rod connected with the second motor and a worm wheel meshed with the worm rod, and the worm wheel is connected with the power output part.

5. The brake caliper according to any one of claims 1-4, further comprising a positioning mechanism for determining an initial position of the power output part.

6. The brake caliper according to claim 5, wherein the positioning mechanism comprises a limiting pin and a limiting spring piece matched with the limiting pin, wherein the limiting spring piece is provided with a positioning groove for the limiting pin to be embedded when the power output part is in the initial position.

7. The brake caliper according to claim 6, further comprising a gear housing, wherein the gear housing is provided with a guide groove for the limiting pin to be embedded, and the limiting spring piece is located in the guide groove.

8. The brake caliper according to claim 7, wherein the limiting pin is movably arranged on the power output part or on the worm wheel coaxial with the power output part, wherein a mounting hole for accommodating the limiting pin is disposed on the power output part or on the worm wheel coaxial with the power output part, wherein an elastic element for applying an elastic force to the limiting pin is disposed in the mounting hole.

9. The brake caliper according to claim 7, wherein the limiting pin is fixedly arranged on the power output part or on the worm wheel connected with the power output part, wherein an elastic element is disposed on the power output part or the worm wheel coaxial with the power output part on the other side of the guide groove, wherein the elastic element applies an elastic force to the power output part or the worm wheel coaxial with the power output part, wherein a gasket is disposed between the elastic element and the power output part, or between the elastic element and the worm wheel coaxial with the power output part.

10. The brake caliper according to claim 1, wherein the power output part of the second transmission mechanism is a rack.

11. The brake caliper according to claim 10, wherein the second transmission mechanism comprises a self-locking transmission mechanism connected with the second motor, and the self-locking transmission mechanism is connected with the power output part.

12. The brake caliper according to claim 11, wherein the self-locking transmission mechanism is a screw nut mechanism.

13. The brake caliper according to claim 12, wherein the self-locking transmission mechanism is connected with the second motor through a third transmission mechanism, wherein the third transmission mechanism comprises a driving gear and a driven gear which are meshed with each other.

14. The brake caliper according to any one of claims 1-13, wherein the power output part of the second transmission mechanism is meshed with a transmission gear located at a power output end or a power input end of the first transmission mechanism.

15. The brake caliper according to any one of claims 1-13, wherein the power output part of the second transmission mechanism is meshed with a transmission gear located between the power input end and the power output end of the first transmission mechanism.

16. The brake caliper according to claim 6, wherein the limiting spring piece is provided with protrusions on both sides of the positioning groove, and a distance between top ends of the protrusions and the power output part is less than a distance between the positioning groove and the power output part.

17. The brake caliper according to claim 7, wherein the guide groove is a circle or arc groove arranged on a surface of the gear housing, and the guide groove and the power output part are coaxially arranged.

18. The brake caliper according to claim 8, wherein a screw threadedly connected with the power output part is provided in the mounting hole, and the elastic element is clamped between the screw and the limiting pin.

19. The brake caliper according to claim 8, wherein the elastic element is a cylindrical helical spring and a compression spring.

20. The brake caliper according to claim 13, wherein the self-locking transmission mechanism comprises a screw shaft and a nut that engage with each other, wherein the screw shaft is fixedly connected with the power output part, and the nut is coaxially and fixedly connected with the driven gear.
